# NEUE EUROPÄISCHE PATENTSCHRIFT

(11) **EP 3 186 063 B2**
(45) Veröffentlichungstag und Bekanntmachung des Hinweises auf die Entscheidung über den Einspruch: **09.12.2026**
(45) Hinweis auf die Patenterteilung: 08.06.2022
(21) Anmeldenummer: 15753945.3
(22) Anmeldetag: 21.08.2015
(51) Int. Cl.: B29C 45/72, B29C 49/12, B29C 49/64, B29C 45/00, B29C 49/06, B29K 67/00, B29C 49/42, B29C 71/00, B29C 35/16, B29B 11/12, B29B 11/06, B29C 43/50, B29K 105/00, B29C 45/40

(54) **SYSTEM ZUR WEITERBEHANDLUNG VON MITTELS SPRITZGIESSEN HERGESTELLTER VORFORMLINGE**
SYSTEM FOR THE FURTHER TREATMENT OF PREFORMS PRODUCED BY MEANS OF INJECTION MOLDING
SYSTÈME DE TRAITEMENT ULTÉRIEUR DE PRÉFORMES FABRIQUÉES PAR MOULAGE PAR INJECTION

(30) Priorität: 29.08.2014 DE 102014112438
(43) Veröffentlichungstag der Anmeldung: 05.07.2017
(73) Patentinhaber: MHT Mold & Hotrunner Technology AG, 65239 Hochheim (DE)
(72) Erfinder: WAGNER, Christian, 55126 Mainz (DE); THÖMMES, Helmut, 54441 Kastel-Staadt (DE); PETRY, Rainer, 55270 Klein-Winternheim (DE)
(74) Vertreter: WSL Patentanwälte Partnerschaft mbB
(86) Internationale Anmeldenummer: PCT/EP2015/069250
(87) Internationale Veröffentlichungsnummer: WO 2016/030293

(56) Entgegenhaltungen:
- WO-A1-2007/062973
- WO-A1-2010/066308
- WO-A1-2012/075578
- DE-A1- 102012 004 613
- US-A1- 2003 214 077
- US-B2- 8 696 347

## Beschreibung

Die vorliegende Erfindung betrifft ein System zur Weiterbehandlung von mittels Spritzgießen hergestellter Vorformlinge.

Beispielsweise werden handelsübliche PET-Flaschen im Allgemeinen durch Streckblasformen des Hohlkörper-Vorformlings hergestellt. Dabei wird der Hohlkörper-Vorformling in einem ersten Schritt mittels Spritzgießen hergestellt. Das sich an den Spritzgießvorgang anschließende Streckblasformen erfolgt im Allgemeinen zu einem späteren Zeitpunkt. Bei der Herstellung der entsprechenden Spritzgießformen ist ein hoher Aufwand vonnöten, da die Spritzgießform einerseits für sehr hohe Drücke ausgelegt sein muss und andererseits auch entsprechende beheizte und/oder gekühlte Kanäle aufweisen muss.

Üblicherweise besteht ein Spritzgießwerkzeug zur Herstellung von PET-Vorformlingen aus einer Vielzahl, zum Beispiel 192, Kavitäten, in die entsprechend ausgebildete Werkzeugkerne eingeführt werden. Bei geschlossenem Werkzeug, d.h. wenn der Kern in die entsprechende Kavität eingesetzt ist, wird zwischen dem Kern einerseits und der Kavität andererseits ein Raum, der sogenannte Formraum, gebildet. In diesen Raum wird dann der plastifizierte Kunststoff, zum Beispiel PET, unter hohem Druck eingespritzt. Sobald der PET-Vorformling genügend abgekühlt ist, kann die Form geöffnet und der Vorformling entnommen werden.

Um die Zykluszeiten, d.h. die Zeit von einem Spritzvorgang bis zu dem nächsten Spritzvorgang, zu reduzieren, ist es bereits üblich, den Vorformling zu einem sehr frühen Zeitpunkt aus der Form zu entnehmen, zu dem der Vorformling an seinen Außenflächen bereits fest ist, dessen innerer Bereich jedoch noch flüssig ist. In diesem Zustand wird der Vorformling im Allgemeinen in ein Aufnahmeelement überführt, welches meist eine Aufnahmekavität aufweist, in welche der Vorformling aufgenommen werden kann. In der Regel kommt eine sogenannte Aufnahmeplatte zum Einsatz, welche meist aus einer Gruppe von Aufnahmekavitäten besteht, wobei jede Aufnahmekavität einen Vorformling aufnehmen kann.

So ist es beispielsweise bei den sogenannten Vertikalwerkzeugen, d.h. denjenigen Spritzgießwerkzeugen, die sich durch eine vertikale Bewegung des einen Werkzeugteils gegenüber dem anderen öffnen, möglich, die Werkzeugform bereits nach zum Beispiel zehn Sekunden zu öffnen, eine Aufnahmeplatte mit entsprechenden Aufnahmekavitäten in die Form einzufahren, die einzelnen Vorformlinge in die Aufnahmekavitäten mittels Schwerkraft hineinfallenzulassen, die Aufnahmeplatte mit den Vorformlingen aus dem Werkzeug herauszufahren, die Form wieder zu schließen und den nächsten Spritzgießvorgang zu beginnen. Während des nächsten Spritzgießvorgangs verbleiben die vorherigen Vorformlinge in der Aufnahmekavität, die üblicherweise gekühlt wird.

Die Aufnahmeplatte hat somit zumindest eine Aufnahmekavität zur Aufnahme eines Vorformlings und eine Vorrichtung zum Bewegen der Aufnahmeplatte zwischen zwei Werkzeughälften einer geöffneten Spritzgießform in eine erste Entnahmeposition und zum Bewegen der Aufnahmeplatte aus der geöffneten Spritzgießform heraus in eine erste Nachbehandlungsposition.

Bei dieser Ausführungsform wird die Aufnahmeplatte zwischen die Formwerkzeughälften des geöffneten Formwerkzeuges bewegt, um die Vorformlinge direkt vom Formwerkzeug in die Aufnahmekavitäten der Aufnahmeplatte zu übergeben. Alternativ dazu kann auch eine zusätzliche Entnahmevorrichtung vorgesehen sein, welche die Vorformlinge von dem Formwerkzeug aufnimmt und an die Aufnahmeplatte übergibt.

Da der Vorformling zur Abkühlung in der Aufnahmekavität eine verhältnismäßig lange Zeit verweilen muss, sodass in der Regel bereits der nächste Vorformling aus dem Spritzgießwerkzeug entnommen werden kann, bevor der Vorformling in der Aufnahmekavität soweit abgekühlt ist, dass er ohne die Gefahr einer Beschädigung entnommen werden kann, ist es bereits üblich, Aufnahmeplatten zu verwenden, die mehrere Gruppen von Aufnahmekavitäten besitzen, wobei jede Gruppe so viele Aufnahmekavitäten aufweist, wie das Spritzgießwerkzeug Vorformlinge pro Spritzzyklus bereitstellt. Die einzelnen Aufnahmekavitätengruppen werden dann nacheinander mit Vorformlingen bestückt, sodass der einzelne Vorformling länger als einen Spritzgießzyklus in der Aufnahmekavität verbleiben kann.

Um die Nachbehandlungszeit in der Aufnahmeplatte weiter zu reduzieren, ist bereits in der EP 2 358 513 B1 vorgeschlagen worden, einen Nachbehandlungsstift in den Vorformling einzubringen, über dessen Spitze Kühlfluid aus dem Bodenbereich des Vorformlings abgesaugt wird. Dabei wird Kühlfluid über einen ringförmigen Spalt, der sich zwischen dem Kühlstift und der Innenwand des Vorformlings bildet, zugeführt. Somit wird der Vorformling nicht nur von außen, sondern auch von innen gekühlt.

Die bekannten Verfahren haben jedoch den Nachteil, dass sie lediglich die Nachbehandlung eines Vorformlings erlauben, dessen Außenkontur im Wesentlichen durch die Innenkontur der Kavität des Spritzgießwerkzeuges vorgegeben ist.

Die Kontur des Vorformlings muss jedoch dann auch auf strömungstechnische Besonderheiten Rücksicht nehmen, die beim Befüllen des Formraums mit der plastifizierten Schmelze zu beachten sind. In der Regel wird der Formraum bei geschlossener Spritzgießform über den Boden des Vorformlings befüllt. Dies hat zur Folge, dass insbesondere im Bodenbereich der effektive Querschnitt relativ groß gewählt werden muss, da über den Bodenbereich der komplette Formraum befüllt werden muss.

Dies hat zur Folge, dass der Boden des Vorformlings häufig mehr PET enthält als notwendig und zudem die Krümmung im Bodenbereich auf fließtechnische Besonderheiten angepasst sein muss.

In der DE 10 2012 004 613 A1 ist ein Verfahren zur Herstellung einer optimierten Bodenkontur beschrieben, bei dem ein Druckkörper die Kuppe des Vorformlings mechanisch ausformt und verstreckt.

In der WO 2010/149522 ist ein Verfahren zur Herstellung von Vorformlingen beschrieben, bei dem der Vorformling innerhalb einer Kavität aufgeblasen wird.

In der US 2003/0214077 ist ein Verfahren und eine Vorrichtung zum Kühlen von Kunststoffteilen nach dem Spritzgießen beschrieben.

Aufgabe der vorliegenden Erfindung ist es daher, ein Nachbehandlungssystem für Vorformlinge bereitzustellen, welches die Herstellung von Vorformlingen mit einer Außenkontur, die von der Innenkontur der Werkzeugkavität abweicht, erlaubt.

Erfindungsgemäß wird dies durch ein System zur Weiterbehandlung von mittels Spritzgießen hergestellter Hohlkörpervorformlinge nach Anspruch 1 gelöst.

Darüber hinaus ist erfindungsgemäß eine Bewegungsvorrichtung vorgesehen, mit der die Aufnahmeplatte relativ zur Nachbehandlungsplatte zwischen einer ersten Position, in der der Prägestift innerhalb der Aufnahmekavität positioniert ist, einer zweiten Position, in der das Nachbehandlungselement innerhalb der Aufnahmekavität positioniert ist oder mit einem darin aufgenommenen Vorformling in Kontakt tritt, und einer dritten Position, in der weder der Prägestift noch das Nachbehandlungselement innerhalb der Aufnahmekavität positioniert ist oder mit einem in dieser aufgenommenen Vorformling in Kontakt tritt, hin- und herbewegt werden kann.

Erfindungsgemäß wird somit innerhalb eines Nachbehandlungssystems ein Prägestift verwendet, der zumindest die Innenseite des Vorformlings verformt. Dies wird dadurch bewirkt, dass der Prägestift mit der Innenseite des Vorformlings in Kontakt tritt, sodass während des Nachbehandelns der Vorformling aufgrund der über den Prägestift auf den Vorformling ausgeübten Kraft gestreckt wird. Zusätzlich kann der Prägestift den Hohlkörpervorformling abdichten und ein Druckfluid in den Vorformling einbringen, wodurch eine Kraft auf die Innenflächen des Vorformlings ausgeübt wird und dieser aufgeblasen wird. Vorzugsweise ist die Aufnahmekavität so ausgebildet, dass deren Innenkontur zumindest abschnittsweise größer als die Außenkontur des nachzubehandelnden Vorformlings ist.

Zweckmäßigerweise ist hierzu die Aufnahmekavität derart ausgebildet, dass deren Innenkontur zumindest im Bodenbereich des Vorformlings deutlich größer ist als die Außenkontur des aus der Spritzgießform entnommenen Vorformlings, sodass mit Hilfe des Prägestiftes die Form des Vorformlings zumindest im Bodenbereich derart geändert werden kann, dass nach der Bearbeitung mit Hilfe des Prägestiftes die Außenkontur des Vorformlings mit der Innenkontur der Aufnahmekavität übereinstimmt.

Da in der Regel während des Spritzgießvorgangs die flüssige Schmelze über den Bodenbereich des Vorformlings zugeführt wird, wird die Dicke des Vorformlings im Bodenbereich nicht nur durch die Anforderungen an die herzustellende Flasche bestimmt, sonderen auch durch die strömungstechnischen Anforderungen der Werkzeugform. Mit anderen Worten muss die Wanddicke des Vorformlings im Bodenbereich häufig dicker ausgeführt werden als für die herzustellende Flasche notwendig, da durch diesen Bereich während des Spritzgießens die Schmelze für den gesamten Vorformling geführt werden muss. Durch das erfindungsgemäße Bearbeiten mittels des Prägestiftes kann die Wanddicke des Vorformlings nach dem Spritzgießens weiter reduziert werden.

In einer bevorzugten Ausführungsform ist der Prägestift relativ zur Nachbehandlungsplatte beweglich. Dies kann beispielsweise dadurch verwirklicht werden, dass der Prägestift mit Hilfe einer Feder in Richtung der Aufnahmekavität vorgespannt ist. Alternativ dazu kann dies beispielsweise dadurch erfolgen, dass der Prägestift einen Kolben aufweist, welcher mit einem Druckfluid beaufschlagt werden kann, um den Prägestift in Richtung Aufnahmekavität zu bewegen.

Das Nachbehandlungselement kann beispielsweise ein Auswurfelement sein, welches eine Halteeinrichtung zum wahlweisen Halten eines Vorformlings aufweist. Alternativ dazu kann das Nachbehandlungselement ein Nachbehandlungsstift mit einem Fluidkanal sein, durch welchen Fluid in das Innere eines in der Aufnahmekavität aufgenommenen Vorformlings eingebracht oder daraus abgesaugt werden kann. In diesem Fall ist der Nachbehandlungsstift möglichst derart ausgebildet, dass er nicht oder zumindest nicht im Bodenbereich mit dem aufgenommenen Vorformling in Kontakt tritt.

Des Weiteren kann eine Vorrichtung zum Bewegen der Aufnahmeplatte zwischen zwei Werkzeughälften einer geöffneten Spritzgießform in eine erste Entnahmeposition und zum Bewegen der Aufnahmeplatte aus der geöffneten Spritzgießform heraus in eine erste Nachbehandlungsposition vorgesehen sein. Alternativ dazu könnte eine separate Überführungsvorrichtung vorgesehen sein, mit welcher die Vorformlinge von dem Formwerkzeug in die Aufnahmekavitäten der Aufnahmeplatte überführt werden.

In einer bevorzugten Ausführungsform weist die Aufnahmeplatte zumindest zwei, vorzugsweise drei Gruppen von Aufnahmekavitäten auf, wobei jeder Gruppe eine Vielzahl, zum Beispiel 192, Aufnahmekavitäten aufweist, und die Gruppen voneinander mit einem Abstand a angeordnet sind, wobei die Vorrichtung zum Bewegen der Aufnahmeplatte derart ausgebildet ist, dass sie die Aufnahmeplatte in mindestens zwei unterschiedlichen Positionen, der ersten Entnahmeposition und einer zweiten Entnahmeposition, zwischen zwei geöffneten Werkzeughälften bewegen kann, welche mit dem Abstand a voneinander beabstandet sind.

Durch das Bereitstellen von mehreren Gruppen von Aufnahmekavitäten können mehrere Gruppen von Vorformlingen nacheinander aus der Spritzgießform entnommen werden, ohne dass die vorherige Vorformlinggruppe das Nachbehandlungswerkzeug verlassen muss.

Die Verweildauer eines Vorformlings im Nachbehandlungssystem ist daher länger als ein Spritzgießzyklus.

In einer weiteren Ausführungsform ist die Vorrichtung zum Bewegen der Aufnahmeplatte derart ausgebildet, dass sie die Aufnahmeplatte in mindestens zwei unterschiedlichen Positionen, der ersten Entnahmeposition und einer zweiten Entnahmeposition, zwischen zwei geöffneten Werkzeughälften bewegen kann, welche mit dem Abstand a voneinander beabstandet sind.

In einer weiteren Ausführungsform ist die Vorrichtung zum Bewegen der Aufnahmeplatte derart ausgebildet, dass sie die Aufnahmeplatte in mindestens zwei unterschiedlichen Positionen, der ersten Nachbehandlungsposition und der zweiten Nachbehandlungsposition, außerhalb der Werkzeughälften bewegen kann, welche mit dem Abstand a voneinander beabstandet sind.

In einer weiteren besonders bevorzugten Ausführungsform ist vorgesehen, dass das Nachbehandlungssystem eine Gruppe Prägestifte und eine Gruppe Nachbehandlungselemente aufweist, die mit einem Abstand a voneinander beabstandet sind, die derart ausgebildet sind, dass in der ersten Position, die Prägestifte innerhalb der ersten Gruppe von Aufnahmekavitäten positioniert sind und die Nachbehandlungselemente innerhalb der zweiten Gruppe von Aufnahmekavitäten positioniert sind oder mit darin aufgenommenen Vorformlingen in Kontakt treten, und in der zweiten Position die Prägestifte innerhalb der zweiten Gruppe von Aufnahmekavitäten positioniert sind und die Nachbehandlungselemente innerhalb der ersten Gruppe von Aufnahmekavitäten positioniert sind oder mit darin aufgenommenen Vorformlingen in Kontakt treten.

Mit anderen Worten kann die Nachbehandlungsplatte entweder in eine erste Nachbehandlungsposition relativ zur Aufnahmeplatte gebracht werden, in der die Prägestifte mit dem ersten Gruppe Aufnahmekavitäten in Kontakt tritt, während z.B. die Auswurfelemente mit der zweiten Gruppe Aufnahmekavitäten in Kontakt treten, oder in eine zweite Nachbehandlungsposition gebracht werden, in der die Gruppe Prägestifte mit der zweiten Gruppe Aufnahmekavitäten in Kontakt gebracht wird, während die Gruppe Auswurfelemente mit der ersten Gruppe Aufnahmekavitäten kooperiert. In der ersten Nachbehandlungsposition werden somit die Vorformlinge, welche sich in der ersten Gruppe der Aufnahmekavitäten befinden, mittels der Prägestifte nachbehandelt, d.h. insbesondere deren Bodenbereich wird aufgrund der Einwirkung des Prägestiftes innerhalb der Aufnahmekavität gestreckt. Gleichzeitig greifen die Auswurfelemente, die beispielsweise als in die Vorformlinge eintauchbare Hülsen ausgebildet sein können, in die zweite Gruppe von Vorformlingen, die sich innerhalb der zweiten Gruppe von Aufnahmekavitäten befinden. Die Auswurfelemente können dann betätigt werden, d.h. sie können beispielsweise mit einer Vakuumquelle verbunden werden, sodass dann, wenn sich die Aufnahmeplatte von der Nachbehandlungsplatte wegbewegt, die Vorformlinge, die mit den Auswurfelementen verbunden sind, auf den Auswurfelementen verbleiben, während die Vorformlinge, die gerade von den Prägestiften bearbeitet worden sind, innerhalb der Aufnahmekavitäten verbleiben. Die Aufnahmeplatte wird dann wieder in die geöffnete Spritzgießform gefahren, um die nächste Gruppe von Vorformlingen aufzunehmen. Während der Aufnahme werden die sich an den Auswurfelementen befindlichen Vorformlinge ausgeworfen, indem beispielsweise die Hülse mit einem Überdruck beaufschlagt wird.

Dann wird die Aufnahmeplatte wieder aus dem Werkzeug herausgefahren und dieses Mal in die andere Nachbehandlungsposition gebracht, sodass jetzt diejenigen Vorformlinge, die zuvor mit Hilfe des Prägestiftes bearbeitet worden sind, von den Auswurfelementen ergriffen werden können, während die gerade aus der Spritzgießform entnommenen Vorformlinge nun mit Hilfe der Prägestifte bearbeitet werden.

In einer weiteren bevorzugten Ausführungsform ist vorgesehen, dass das Nachbehandlungssystem eine Gruppe Prägestifte und eine Gruppe Nachbehandlungselemente aufweist, die mit einem Abstand a voneinander beabstandet sind, die derart ausgebildet sind, dass in der ersten Position, die Prägestifte innerhalb der ersten Gruppe von Aufnahmekavitäten positioniert sind und die Nachbehandlungselemente innerhalb der zweiten Gruppe von Aufnahmekavitäten positioniert sind oder mit darin aufgenommenen Vorformlingen in Kontakt treten, und in der zweiten Position die Prägestifte innerhalb der zweiten Gruppe von Aufnahmekavitäten positioniert sind und die Nachbehandlungselemente innerhalb der ersten Gruppe von Aufnahmekavitäten positioniert sind oder mit darin aufgenommenen Vorformlingen in Kontakt treten.

In einer weiteren bevorzugten Ausführungsform weist das Nachbehandlungssystem zumindest eine weitere Gruppe Nachbehandlungselemente auf, wobei die eine Gruppe Nachbehandlungselemente durch Auswurfelemente gebildet wird und die andere Gruppe Nachbehandlungselemente durch Nachbehandlungsstifte mit Fluidkanal gebildet wird.

In diesem Fall sollte die Aufnahmeplatte zumindest drei Gruppen von Aufnahmekavitäten aufweisen.

Dadurch wird sichergestellt, dass jede Vorformlinggruppe zunächst mit Hilfe der Prägestifte bearbeitet wird, anschließend mit Hilfe der Nachbehandlungsstifte mit Fluidkanal bearbeitet wird und zum Schluss mit Hilfe des Auswurfelementes aus der Aufnahmeplatte entnommen wird. Mit Hilfe der Nachbehandlungsstifte kann entweder Fluid in die Vorformlinge eingeblasen oder aus diesen abgesaugt werden. Ziel dabei ist es, einen Kühlfluidstrom innerhalb des Vorformlings zu erzeugen, der entlang des hohlzylinderförmigen Kanals strömt, welcher sich zwischen den Nachbehandlungsstiften und dem Vorformling bildet, um eine effektive Kühlung der Innenseite des Vorformlings zu erreichen.

In einer bevorzugten Ausführungsform weist die Nachbehandlungsplatte eine Prägeplatte auf, welche relativ zur Nachbehandlungsplatte bewegbar ist, wobei der Prägestift oder der Gruppe Prägestifte an der Prägeplatte befestigt ist und sich der Prägestift oder der Gruppe Prägestifte durch eine oder mehrere Öffnungen in der Nachbehandlungsplatte erstreckt, wobei vorzugsweise Nachbehandlungsplatte und Prägeplatte über eine Säulenführung miteinander verbunden sind. Alternativ kann natürlich auch die Prägeplatte Öffnungen aufweisen, durch welche sich die weiteren Nachbehandlungselemente erstrecken.

Es hat sich gezeigt, dass eine Bewegung der Prägestifte relativ zu den Vorformlingen, die unabhängig von der Bewegung der Nachbehandlungsstifte relativ zu den Vorformlingen ist, von Vorteil ist. So kann es beispielsweise nützlich sein, wenn sich der Prägestift während eines kompletten Spritzgusszyklus langsam axial bewegt, um den Boden des Vorformlings zu strecken. Gleichzeitig ist jedoch eine Bewegung des Nachbehandlungsstiftes und/oder des Auswerferelementes, welches ebenfalls an der Nachbehandlungsplatte befestigt ist, nicht erwünscht.

Zudem erlaubt diese Konfiguration, dass die Nachbehandlungsplatte mit der beweglichen Hälfte des Spritzgießwerkzeuges verbunden ist. Dies hat nämlich zur Folge, dass immer dann, wenn das Spritzgießwerkzeug geschlossen wird, sich die Nachbehandlungsplatte in Richtung der entsprechend positionierten Aufnahmeplatte bewegt. Bei geschlossenem Spritzgießwerkzeug kann dann, falls gewünscht, der Prägestift separat bewegt werden.

Im Grunde genommen gibt es drei bevorzugte Möglichkeiten, über den die Prägestifte Kraft auf das Innere des Vorformlings auszuüben und diesen zu verformen:
1.) Vorsehen gegenüber der Nachbehandlungsplatte unbeweglicher Prägestifte und Bewegen der Nachbehandlungsplatte in die erste oder zweite Position,
2.) Vorsehen gegenüber der Nachbehandlungsplatte beweglicher Prägestifte mit individuellem Antrieb, wie z.B. einem pneumatischen Antrieb, und individuelle Bewegung der Prägestifte relativ zur Nachbehandlungplatte in der ersten oder zweiten Position der Aufnahmeplatte oder
3.) Vorsehen gegenüber der Nachbehandlungsplatte beweglicher Prägestifte mit gemeinsamen Antrieb, beispielsweise durch Montage der Prägestifte auf gemeinsamer beweglicher Platte.

Insbesondere in den Fällen 2.) und 3.) kann nach Beendigung der Bearbeitung durch die Prägestifte, der Antrieb verwendet werden, um die Prägestifte gegenüber den Vorformlingen wieder zurückzuziehen.

Insbesondere im Fall 2.) kann eine Sensorvorrichtung, welche die korrekte Bearbeitungsposition der einzelnen Prägestifte überwacht, von Vorteil sein.

In einer weiteren bevorzugten Ausführungsform hat der Prägestift oder die Gruppe Prägestifte eine oder mehrere Öffnungen, durch welche Fluid in das Innere des Vorformlings zugeführt werden kann. Dabei ist der Prägestift mit einem Abdichtelement vorgesehen, sodass, wenn der Prägestift innerhalb des Vorformlings angeordnet ist, der Vorformling abgedichtet wird, sodass durch die Zufuhr von Fluid ein Überdruck im Inneren des Vorformlings erzeugt werden kann. Durch den Überdruck kommt es zu einer Blasverformung des Vorformlings. Prinzipiell wäre es daher möglich, die Aufnahmekavitäten derart auszugestalten, dass deren Innenkontur der Außenkontur der herzustellenden PET-Flaschen entspricht. Bei einer solchen Vorrichtung könnte somit im Nachbehandlungssystem zugleich der sich im Allgemeinen an die Herstellung der Vorformlinge anschließende separate Streckblasformvorgang integriert werden. Praktikabel wird eine solche Anordnung jedoch in der Regel nur dann sein, wenn der Außendurchmesser der herzustellenden PET-Flasche nicht deutlich größer als der Außendurchmesser der Vorformlinge ist, da ansonsten der Abstand der Kerne und Kavitäten des Spritzgießwerkzeuges größer gewählt werden müsste als notwendig, um Platz für die zwischen zwei benachbarten Kernen angeordneten Aufnahmekavitäten zu lassen.

Des Weiteren kann es von Vorteil sein, wenn die Aufnahmekavität eine Aufnahmeöffnung, über welche ein Vorformling in die Aufnahmekavität eingesetzt werden kann, und einen Fluidkanal aufweist, der derart angeordnet ist, dass ein Fluid bei verschlossener Aufnahmeöffnung über den Fluidkanal in die Aufnahmekavität eingebracht oder aus der Aufnahmekavität entnommen werden kann, wobei die Aufnahmekavität sich entlang einer Längsachse erstreckt und der Fluidkanal eine Kanalöffnung aufweist, die auf oder in der Nähe der Längsachse angeordnet ist und der Aufnahmeöffnung gegenüber angeordnet ist, wobei im Fluidkanal im Bereich der Kanalöffnung eine Stützelement mit einer Stützfläche angeordnet ist, welche dafür vorgesehen ist, bei in die Aufnahmekavität eingesetztem Vorformling mit diesem in Kontakt zu treten

Beispielsweise kann die Nachbehandlungsplatte mit der beweglichen Werkzeughälfte des Spritzgiesswerkzeuges verbunden sein, so dass beim Öffnen der Spritzgießform die Nachbehandlungsplatte relativ zur Aufnahmeplatte bewegt wird. In der Regel ist diejenige Werkzeughälfte beweglich, welche die Formkerne aufweist, da über die Formkavitäten die plastifizierte PET-Schmelze zugeführt wird und daher der Aufwand zur Bewegung der Kavitätenseite des Werkzeuges größer ist.

Insbesondere dann, wenn die Nachbehandlungsplatte nur an einer Seite mit der beweglichen Werkzeughälfte verbunden ist, ist in einer bevorzugten Ausführungsform eine Verriegelungseinrichtung vorgesehen, welche in einem aktivierten Zustand eine formschlüssige Verbindung zwischen Aufnahmeplatte und Nachbehandlungsplatte in der ersten und zweiten Position bereitstellt, die deaktiviert werden muss, wenn die Aufnahmeplatte relativ zur Nachbehandlungsplatte in die dritte Position bewegt werden soll. Durch diese Maßnahme wird eine ausweichende Bewegung der Nachbehandlungsplatte gegenüber der Aufnahmeplatte aufgrund der durch die Prägestifte auf die Aufnahmeplatte aufgebrachte Kraft verhindert.

Alternativ dazu könnte auch ein Abstützelement oder ein Anschlag vorgesehen sein, der die Nachbehandlungsplatte an der der Befestigung an der Werkzeughälfte abgewandten Seite abstützt.

Die beschriebene Verriegelungseinrichtung kann in einer Ausführungsform, die nicht zur vorliegenden Erfindung gehört, auch verwendet werden in einem System zur Weiterbehandlung von mittels Spritzgießen hergestellter Hohlkörpervorformlinge mit
i) einer Aufnahmeplatte, welche zumindest eine Aufnahmekavität zur Aufnahme eines Vorformlings aufweist,
ii) einer Nachbehandlungsplatte, mit zumindest einen Prägestift, der dafür vorgesehen ist, die Innenkontur des Vorformlings zu verändern, indem er entweder mit der Innenseite des Vorformlings während der Nachbehandlung in Kontakt tritt oder den Vorformling verschließt, den Innenraum mit einem unter Druck stehenden Fluid beaufschlagt, wodurch der Vorformling aufgeblasen wird,
iii) einer Bewegungsvorrichtung, mit der die Aufnahmeplatte relativ zur Nachbehandlungsplatte zwischen einer Kontaktposition, in der der Prägestift innerhalb der Aufnahmekavität positioniert ist, und einer Bereitstellungsposition, in der der Prägestift außerhalb der Aufnahmekavität positioniert ist, hin- und herbewegt werden kann, und
iv) einer Verriegelungseinrichtung, welche in einem aktivierten Zustand eine formschlüssige Verbindung zwischen Aufnahmeplatte und Nachbehandlungsplatte in der Kontaktposition bereitstellt, die deaktiviert werden muss, wenn die Aufnahmeplatte relativ zur Nachbehandlungsplatte in die Bereitstellungsposition bewegt werden soll.

Dieses System unterscheidet sich von dem zuerst beschriebenen lediglich dadurch, dass die Nachbehandlungsplatte kein zusätzliches Nachbehandlungselement aufweist. Alle anderen in Verbindung mit der zuerst beschriebenen Ausführungsform erwähnten Merkmale können selbstverständlich auch mit der Ausführungsform ohne zusätzliches Nachbehandlungselement verwirklicht werden. In diesem Fall könnte der Prägestift auch als Auswerfelement ausgebildet sein.

In seltenen Fällen kann es vorkommen, dass Vorformlinge nach der Bearbeitung durch den Prägestift nicht in der Kavität der Aufnahmeplatte verbleiben, sondern am Prägestift hängenbleiben. Dies hat zur Folge, dass der hängengebliebene Vorformling in den nachfolgenden Vorformling gepresst wird, was die Zerstörung beider Vorformlinge zur Folge hat.

Um dies zu verhindern ist in einer bevorzugten Ausführungsform eine Sensoreinrichtung vorgesehen, welche den Prägestift überwacht, wodurch festgestellt werden kann, ob ein Vorformling auf dem Prägestift hängengeblieben ist. Die Sensoreinrichtung kann beispielsweise eine Lichtschranke aufweisen, deren Lichtstrahl unterbrochen ist, wenn sich ein Vorformling auf dem Prägestift befindet.

Alternativ oder in Kombination dazu kann die Nachbehandlungsplatte eine Abstreifervorrichtung aufweisen, mit deren Hilfe Vorformlinge, wenn die Aufnahmeplatte aus der ersten oder der zweiten Position in die dritte Position gebracht wird, den Vorformling kontaktiert und von dem Prägestift entfernt. Die Abstreifervorrichtung kann beispielsweise aus einem federndem Ring bestehen, der mittels einer Feder auf die Vorformlingöffnung gedrückt wird. Wenn sich die Nachbehandlungsplatte von der Aufnahmeplatte wegbewegt, wird dann der federnd vorgespannte Ring den Vorformling von dem Prägestift schieben.

Weitere Vorteile, Merkmale und Anwendungsmöglichkeiten der vorliegenden Erfindung werden deutlich anhand der folgenden Beschreibung einer bevorzugten Ausführungsform. Es zeigen:
Figur 1 eine schematische Darstellung eines PET-Spritzgießsystems mit Nachbehandlungseinheit,
Figur 2 eine Schnittansicht einer ersten erfindungsgemäßen Ausführungsform.

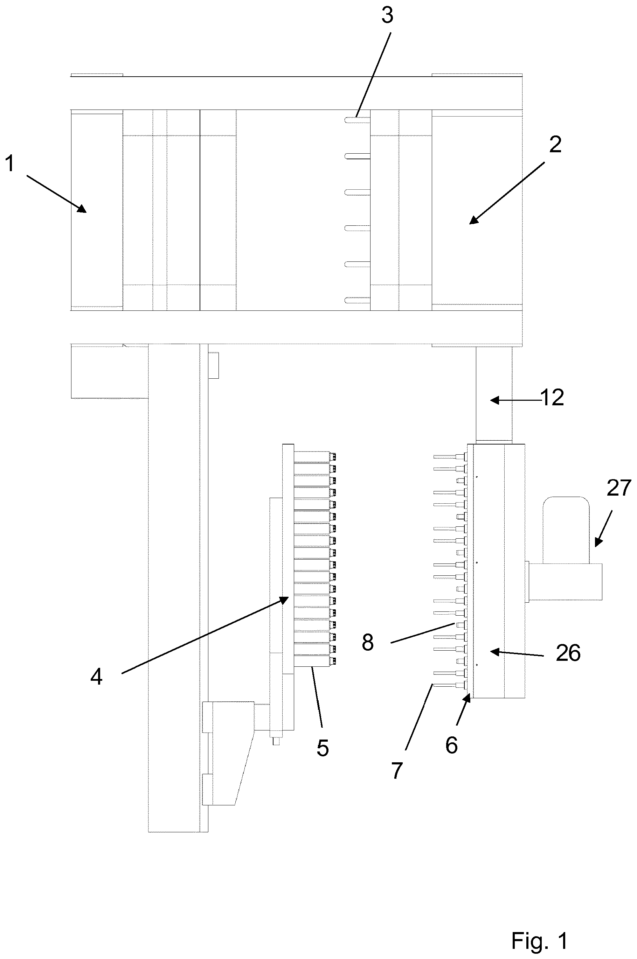

Fig. 1 zeigt eine schematische Darstellung eines PET-Spritzgießsystems mit Nachbehandlungssystem. Die Spritzgießform besteht aus zwei relativ zueinander beweglichen Platten 1, 2, wobei in der gezeigten Ausführungsform eine Platte 1 stationär und eine Platte 2 beweglich ist.

Die eine Platte weist Kerne 3 auf, während die andere Platte entsprechende Kavitäten (nicht gezeigt) besitzt. Die beiden Platten können relativ zueinander von einer geöffneten Position, die in der Fig. 1 gezeigt ist, in eine geschlossene Position bewegt werden, in der die Kerne 3 der beweglichen Platte 2 in den entsprechenden Kavitäten der stationären Platte 1 angeordnet sind. Zwischen den Kavitäten der stationären Platte 1 und den Kernen 3 der beweglichen Platte 2 bildet sich dann der sogenannte Formraum, der mit plastifiziertem PET gefüllt wird, um einen Vorformling auszubilden.

Sobald die äußeren Flächen des Vorformlings abgekühlt, d.h. fest geworden sind, wird die Form geöffnet und eine Aufnahmeplatte 4 wird zwischen die geöffneten Platten 1, 2 gefahren. Die auf den Kernen 3 der sich bewegenden Platte sitzenden Vorformlinge werden dann in entsprechende Aufnahmekavitäten 5 der Aufnahmeplatte 4 übergeben.

Im gezeigten Beispiel weist das Spritzgießwerkzeug sechs Kerne auf, d.h. im Spritzgießzyklus werden sechs Vorformlinge hergestellt. Die entsprechende Aufnahmeplatte 4 weist jedoch 18 (3x6) Aufnahmekavitäten 5 auf, die jeweils einen Vorformling aufnehmen können. Die Aufnahmeplatte 4 weist somit drei Gruppen von Aufnahmekavitäten 5 auf, die nacheinander mit entsprechenden Vorformlingen bestückt werden. Sobald die Vorformlinge von den Kernen 3 an die Aufnahmekavitäten 5 der Aufnahmeplatte 4 übergeben worden sind, wird die Aufnahmeplatte 4 wieder in die in Fig. 1 gezeigte Position gefahren, und die Spritzgießform, bestehend aus den beiden Platten 1, 2 kann wieder geschlossen werden. Da in der gezeigten Ausführungsform die Aufnahmeplatte 4 mit der stationären Platte 1 verbunden ist, bewegt sich die mit der sich bewegenden Platte 2 verbundene Nachbehandlungsplatte 6 auf die Aufnahmeplatte 4 zu. Die Nachbehandlungsplatte 6 weist eine Reihe von Nachbehandlungsstiften 7 auf, die, während die Form geschlossen ist, in die in der Aufnahmeplatte 4 gehaltene Vorformlinge eintauchen.

Die einzelnen Nachbehandlungsstifte 7 sind auf einer Nachbehandlungsplatte 6 montiert. Weiterhin sind Übergabeelemente 8 bzw. Auswurfelemente an der Nachbehandlungsplatte 6 befestigt, die für die Übergabe der nachbehandelten Vorformlinge 9 von der Aufnahmeplatte 4 auf die Übergabeelemente 8 bzw. die Nachbehandlungsplatte 6 dienen. An der Nachbehandlungsplatte 6 ist ein Gebläse 27 befestigt, mit dem in einer Druckkammer 26 Überdruck oder Unterdruck erzeugt werden kann. Die gesamte Nachbehandlungsplatte 6 ist um die Welle 12 drehbar gestaltet, sodass die Nachbehandlungsplatte 6 um 90° gedreht werden kann, sodass durch die Schwerkraft die auf dem Übergabeelement 8 sitzenden Vorformlinge abgeworfen werden können.

Man erkennt, dass die Nachbehandlungsplatte 6 mehr Stifte aufweist als die Aufnahmeplatte 4 Aufnahmekavitäten 5 aufweist. Die Aufnahmeplatte 4 kann daher in mehreren unterschiedlichen Positionen (im gezeigten Beispiel drei) relativ zur Nachbehandlungsplatte 6 positioniert werden. Die entsprechenden Positionen werden nacheinander, nachdem jeweils ein neuer Gruppe von Vorformlingen 9 aus der Spritzgießform entnommen worden ist, eingenommen, sodass jeweils die am längsten in der Aufnahmeplatte 4 gehaltene Vorformlinggruppe gegenüber den Übergabeelementen 8 positioniert wird und daher entnommen werden kann.

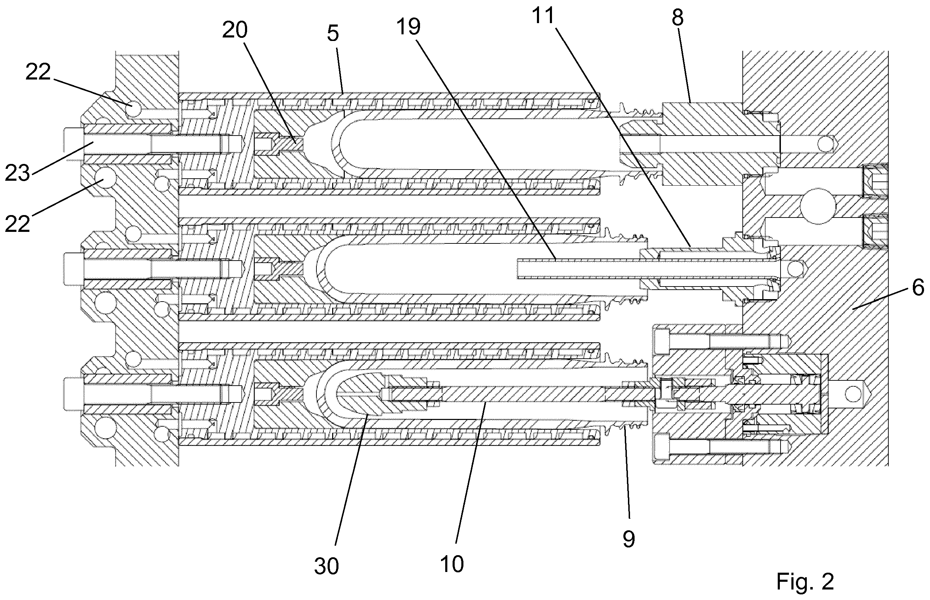

In Figur 2 ist eine Schnittansicht einer Ausführungsform der Erfindung gezeigt. An der Nachbehandlungsplatte 6 ist hier ebenfalls ein Übergabe- bzw. Auswurfelement 8 sowie ein Nachbehandlungselement 7 gezeigt. Zusätzlich weist die Nachbehandlungsplatte 6 hier einen Prägestift 10 auf. In der Figur 2 ist ebenso die Aufnahmekavität 5 dargestellt, welche über die Kühlkanäle 22 über spiralförmige Kanäle gekühlt wird. Am Boden der Aufnahmekavität 5 kann über die Zuführung 23 wahlweise Druckluft oder Vakuum zugeführt werden, um den Vorformling 9 entweder innerhalb der Aufnahmekavität 5 zu halten oder aus dieser herauszustoßen. Der Nachbehandlungsstift 7 ist konzentrisch von einer Hülse 11 umgeben, über die Kühlluft ins Innere des Vorformlings 9 geleitet wird, welche u. a. über die Spitze 19 des Nachbehandlungsstiftes 7 abgeführt wird. Weiterhin sind Kühlkanäle 22 vorgesehen, mit deren Hilfe die Nachbehandlungsplatte 6 gekühlt, vorzugsweise wassergekühlt, werden kann.

Des weiteren weisen die Aufnahmekavitäten 5 der Entnahmeplatte 4 in der gezeigten Ausführungsform der Aufnahmeöffnung, über die ein Vorformling 9 eingesetzt werden, gegenüberliegend einen Fluidkanal auf, der auf der zentralen Achse der Aufnahmekavität 5 angeordnet ist. Im Fluidkanal ist ein Stützelement 20 mit einer Stützfläche positioniert, welche bei in die Aufnahmekavität 5 eingesetztem Zustand mit diesem zumindest nach der Bearbeitung mit dem Prägestift 10 in Kontakt tritt.

Während der Nachbehandlung wird somit in jeden Vorformling 9 nacheinander der Prägestift 10, der Nachbehandlungsstift 7 und das Übergabeelement 8 eingeführt. Der Prägestift 10 dient dabei dazu, zumindest den Bodenbereich des Vorformlings 9 zu strecken, d.h. in eine Form zu bringen, die durch den Boden der Aufnahmekavität 5 und der Außenkontur des Kontaktelementes 30, das am Prägestift 10 befestigt ist, definiert wird.

### Bezuaszeichenliste

- 1, 2: Platte
- 3: Kerne
- 4: Aufnahmeplatte
- 5: Aufnahmekavität
- 6: Nachbehandlungsplatte
- 7: Nachbehandlungsstift
- 8: Übergabeelement (Auswurfelement)
- 9: Vorformling
- 10: Prägestift
- 11: Hülse
- 12: Welle
- 19: Spitze
- 20: Stützelement
- 22: Kühlkanäle
- 23: Zuführung
- 30: Kontaktelement

## Patentansprüche

1. System zur Weiterbehandlung von mittels Spritzgießen hergestellter Hohlkörpervorformlinge (9), welche eine Außenkontur haben, mit
i) einer Aufnahmeplatte (4), welche zumindest eine Aufnahmekavität (5) zur Aufnahme eines Vorformlings (9) aufweist, wobei die Aufnahmekavität so ausgebildet ist, dass deren Innenkontur zumindest abschnittsweise größer als die Außenkontur des nachzubehandelnden Hohlkörpervorformlings ist,
ii) einer Nachbehandlungsplatte (6), welche aufweist
a) zumindest einen Prägestift (10), der dafür vorgesehen ist, die Innenkontur des Vorformlings (9) durch direkten Kontakt zu verändern, indem er mit der Innenseite des Vorformlings (9) während der Nachbehandlung in Kontakt tritt,
wobei die Nachbehandlungsplatte **gekennzeichnet ist durch**
b) zumindest ein Nachbehandlungselement (7, 8), das dafür vorgesehen ist, in das Innere eines in der Aufnahmekavität (5) aufgenommenen Vorformling (9) einzutauchen oder mit diesem in Kontakt zu treten,
und
iii) einer Bewegungsvorrichtung, mit der die Aufnahmeplatte (4) relativ zur Nachbehandlungsplatte (6) zwischen einer ersten Position, in der der Prägestift (10) innerhalb der Aufnahmekavität (5) positioniert ist, einer zweiten Position, in der das Nachbehandlungselement (7,8) innerhalb der Aufnahmekavität (5) positioniert ist oder mit einem darin aufgenommenen Vorformling (9) in Kontakt tritt, und einer dritten Position, in der weder der Prägestift (10) innerhalb der Aufnahmekavität (5) positioniert ist noch das Nachbehandlungselement (7,8) innerhalb der Aufnahmekavität (5) positioniert ist oder mit dem Vorformling (9) in Kontakt tritt, hin- und herbewegt werden kann.

2. System nach Anspruch 1, **dadurch gekennzeichnet, dass** das Nachbehandlungselement (7,8) ein Auswurfelement (8), welches eine Halteeinrichtung zum wahlweisen Halten eines Vorformlings (9) aufweist, ist.

3. System nach Anspruch 1, **dadurch gekennzeichnet, dass** das Nachbehandlungselement (7,8) ein Nachbehandlungsstift (7) mit einem Fluidkanal ist, durch welchen Fluid in das Innere eines in der Aufnahmekavität (5) aufgenommenen Vorformlings (9) eingebracht oder daraus abgesaugt werden kann.

4. System nach einem der Ansprüche 1 bis 3, **dadurch gekennzeichnet, dass** der Prägestift (10) ein Abdichtelement, welches mit der Öffnung des Hohlkörpervorformlings (9) in Kontakt treten und diese abdichten kann, und eine Fluidzufuhr zur Einbringung eines unter Druck stehenden Fluids in den Hohlkörpervorformling (9).

5. System nach einem der Ansprüche 1 bis 4, **dadurch gekennzeichnet, dass** der Prägestift (10) relativ zur Nachbehandlungsplatte (6) bewegbar ist.

6. System nach einem der Ansprüche 1 bis 5, **dadurch gekennzeichnet, dass** die Aufnahmeplatte (4) zumindest zwei, vorzugsweise drei Gruppen von Aufnahmekavitäten (5) besitzt, wobei jede Gruppe eine Vielzahl, z.B. 192, Aufnahmekavitäten (5) aufweist, und die Gruppen voneinander mit einem Abstand a angeordnet sind, wobei vorzugsweise die Vorrichtung zum Bewegen der Aufnahmeplatte (4) derart ausgebildet ist, dass sie die Aufnahmeplatte (4) in mindestens zwei unterschiedlichen Positionen, der ersten Entnahmeposition und einer zweiten Entnahmeposition, zwischen zwei geöffneten Werkzeughälften bewegen kann, welche mit dem Abstand a voneinander beabstandet sind.

7. System nach Anspruch 6, **dadurch gekennzeichnet, dass** die Vorrichtung zum Bewegen der Aufnahmeplatte (4) derart ausgebildet ist, dass sie die Aufnahmeplatte (4) in mindestens zwei unterschiedlichen Positionen, der ersten Nachbehandlungsposition und der zweiten Nachbehandlungsposition, außerhalb der Werkzeughälften bewegen kann, welche mit dem Abstand a voneinander beabstandet sind.

8. System nach einem der Ansprüche 6 bis 7, **dadurch gekennzeichnet, dass** das Nachbehandlungssystem eine Gruppe Prägestifte (10) und eine Gruppe Nachbehandlungselemente (7, 8) aufweist, die mit einem Abstand a voneinander beabstandet sind, die derart ausgebildet sind, dass in der ersten Position, die Prägestifte (10) innerhalb der ersten Gruppe von Aufnahmekavitäten (5) positioniert sind und die Nachbehandlungselemente (7, 8) innerhalb der zweiten Gruppe von Aufnahmekavitäten (5) positioniert sind oder mit darin aufgenommenen Vorformlingen (9) in Kontakt treten, und in der zweiten Position die Prägestifte (10) innerhalb der zweiten Gruppe von Aufnahmekavitäten (5) positioniert sind und die Nachbehandlungselemente (7, 8) innerhalb der ersten Gruppe von Aufnahmekavitäten (5) positioniert sind oder mit darin aufgenommenen Vorformlingen (9) in Kontakt treten, wobei vorzugsweise das Nachbehandlungssystem zumindest eine weitere Gruppe Nachbehandlungselemente (7, 8) aufweist, wobei die eine Gruppe Nachbehandlungselemente (7, 8) durch Auswurfelemente (8) gebildet wird und die andere Gruppe Nachbehandlungselemente durch Nachbehandlungsstifte (7) mit Fluidkanal gebildet wird.

9. System nach einem der Ansprüche 1 bis 8, **dadurch gekennzeichnet, dass** die Nachbehandlungsplatte (6) eine Prägeplatte aufweist, welche relativ zur Nachbehandlungsplatte (6) bewegbar ist, wobei der Prägestift (10) oder die Gruppe Prägestifte (10) an der Prägeplatte befestigt ist, wobei vorzugsweise Nachbehandlungsplatte (6) und Prägeplatte über eine Säulenführung miteinander verbunden sind und besonders bevorzugt sich der Prägestift (10) oder die Gruppe Prägestifte (10) durch eine oder mehrere Öffnungen in der Nachbehandlungsplatte (6) erstreckt.

10. System nach einem der Ansprüche 1 bis 9, **dadurch gekennzeichnet, dass** der Prägestift (10) oder die Gruppe Prägestifte (10) eine oder mehrere Öffnungen zur Zufuhr von Fluid in das Innere des Vorformlings (9) aufweist, wobei der Prägestift (10) ein Abdichtelement aufweist, welches derart ausgebildet ist, dass, wenn der Prägestift (10) innerhalb des Vorformlings (9) angeordnet ist, den Vorformling (9) abdichten kann, so dass durch die Zufuhr von Fluid ein Überdruck im Inneren des Vorformlings (9) erzeugt werden kann.

11. System nach einem der Ansprüche 1 bis 10, **dadurch gekennzeichnet, dass** eine Verriegelungseinrichtung vorgesehen ist, welche in einem aktivierten Zustand eine formschlüssige Verbindung zwischen Aufnahmeplatte (4) und Nachbehandlungsplatte (6) in der ersten und zweiten Position bereitstellt, die deaktiviert werden muss, wenn die Aufnahmeplatte (4) relativ zur Nachbehandlungsplatte (6) in die dritte Position bewegt werden soll.

## Claims

1. A system for the further treatment of hollow body preforms (9) produced by injection molding, which have an external contour, comprising
i) a receiving plate (4) having at least one receiving cavity (5) for receiving a preform (9), wherein the receiving cavity is configured such that its internal contour is, at least in some sections, larger than the external contour of the hollow body preform to be post-treated,
ii) a post-treatment plate (6) which has
a) at least one impression pin (10) provided for changing the internal contour of the preform (9) by direct contact by coming into contact with the inside of the preform (9) during the post-treatment
wherein the post-treatment plate is **characterized by**
b) at least one post-treatment element (7, 8) which is provided for passing into the interior of a preform (9) received in the receiving cavity (5) or coming into contact with the preform,
and
iii) a movement device with which the receiving plate (4) can be reciprocated relative to the post-treatment plate (6) between a first position in which the impression pin (10) is positioned within the receiving cavity (5), a second position in which the post-treatment element (7, 8) is positioned within the receiving cavity (5) or comes into contact with a preform (9) received therein, and a third position in which the impression pin (10) is not positioned within the receiving cavity (5) and the post-treatment element (7, 8) is not positioned within the receiving cavity (5) and does not come into contact with the preform (9)..

2. A system as set forth in claim 1 **characterised in that** the post-treatment element (7, 8) is an ejection element (8) having a holding device for selectively holding a preform (9).

3. A system as set forth in claim 1 **characterised in that** the post-treatment element (7, 8) is a post-treatment pin (7) having a fluid passage through which fluid can be introduced into or sucked out of the interior of a preform (9) received in the receiving cavity (5).

4. A system as set forth in one of claims 1 through 3 **characterised in that** the impression pin (10) has a sealing element which can come into contact with the opening of the hollow body preform (9) and seal same off and a fluid feed for introducing a fluid under pressure into the hollow body preform (9).

5. A system as set forth in one of claims 1 through 4 **characterised in that** the impression pin (10) is moveable relative to the post-treatment plate (6).

6. A system as set forth in one of claims 1 through 5 **characterised in that** the receiving plate (4) has at least two and preferably three groups of receiving cavities (5), wherein each group has a plurality of, for example 192, receiving cavities (5), and the groups are arranged at a spacing a from each other, wherein preferably the device for moving the receiving plate (4) is so adapted that it can move the receiving plate (4) into at least two different positions, the first removal position and a second removal position, between two opened tool halves, which are spaced from each other at the spacing a.

7. A system as set forth in claim 6 **characterised in that** the device for moving the receiving plate (4) is so adapted that it can move the receiving plate (4) into at least two different positions, the first post-treatment position and the second post-treatment position, outside the tool halves, which are spaced at the spacing a from each other.

8. A system as set forth in one of claims 6 through 7 **characterised in that** the post-treatment system has a group of impression pins (10) and a group of post-treatment elements (7, 8) which are spaced from each other at a spacing a, which are so adapted that in the first position the impression pins (10) are positioned within the first group of receiving cavities (5) and the post-treatment elements (7, 8) are positioned within the second group of receiving cavities (5) or come into contact with preforms (9) received therein, and in the second position the impression pins (10) are positioned within the second group of receiving cavities (5) and the post-treatment elements (7, 8) are positioned within the first group of receiving cavities (5) or come into contact with preforms (9) received therein, wherein preferably the post-treatment system has at least one further group of post-treatment elements (7, 8), wherein the one group of post-treatment elements (7, 8) is formed by ejection elements (8) and the other group of post-treatment elements is formed by post-treatment pins (7) with fluid passage.

9. A system as set forth in one of claims 1 through 8 **characterised in that** the post-treatment plate (6) has an impression plate moveable relative to the post-treatment plate (6), wherein the impression pin (10) or the group of impression pins (10) is fixed to the impression plate, wherein preferably the post-treatment plate (6) and the impression plate are connected together by way of a column guide means and particularly preferably the impression pin (10) or the group of impression pins (10) extends through one or more openings in the post-treatment plate (6).

10. A system as set forth in one of claims 1 through 9 **characterised in that** the impression pin (10) or the group of impression pins (10) has one or more openings for the feed of fluid into the interior of the preform (9), wherein the impression pin (10) has a sealing element which is so adapted that when the impression pin (10) is arranged within the preform (9) it can seal off the preform (9) so that an overpressure can be produced in the interior of the preform (9) by the feed of fluid.

11. A system as set forth in one of claims 1 through 10 **characterised in that** there is provided a locking device which in an activated condition provides a positively locking connection between the receiving plate (4) and the post-treatment plate (6) in the first and second positions, which has to be deactivated if the receiving plate (4) is to be moved relative to the post-treatment plate (6) into the third position.

## Revendications

1. Système de transformation de préformes de corps creux (9) fabriquées par moulage par injection, qui ont un contour extérieur, comprenant
i) un plateau d'accueil (4) comprenant au moins une cavité d'accueil (5) permettant d'accueillir une préforme (9), la cavité d'accueil étant conçue de telle sorte que son contour intérieur soit, au moins par sections, plus grand que le contour extérieur de la préforme de corps creux à traiter,
ii) un plateau de post-traitement (6) comprenant :
a) au moins une broche d'estampage (10) conçue pour modifier le contour intérieur de la préforme (9) par contact direct en entrant en contact avec la face intérieure de la préforme (9) pendant le post-traitement,
le plateau de post-traitement étant **caractérisé par**
b) au moins un élément de post-traitement (7, 8) conçu pour plonger à l'intérieur d'une préforme (9) accueillie dans la cavité d'accueil (5) ou pour entrer en contact avec celle-ci,
et
iii) un dispositif de déplacement avec lequel le plateau d'accueil (4) peut être déplacé en va-et-vient par rapport au plateau de post-traitement (6) entre une première position dans laquelle la broche d'estampage (10) est positionnée à l'intérieur de la cavité d'accueil (5), une deuxième position dans laquelle l'élément de post-traitement (7, 8) est positionné à l'intérieur de la cavité d'accueil (5) ou vient en contact avec une préforme (9) accueillie dans celle-ci, et une troisième position dans laquelle ni la broche d'estampage (10) n'est positionnée à l'intérieur de la cavité d'accueil (5) ni l'élément de post-traitement (7, 8) n'est positionné à l'intérieur de la cavité d'accueil (5) ou ne vient en contact avec la préforme (9).

2. Système selon la revendication 1, **caractérisé en ce que** l'élément de post-traitement (7, 8) est un élément d'éjection (8) comprenant un dispositif de retenue permettant de retenir de manière sélective une préforme (9).

3. Système selon la revendication 1, **caractérisé en ce que** l'élément de post-traitement (7, 8) est une broche de post-traitement (7) munie d'un canal de fluide à travers lequel du fluide peut être introduit à l'intérieur d'une préforme (9) accueillie dans la cavité d'accueil (5) ou être aspiré hors de celle-ci.

4. Système selon l'une quelconque des revendications 1 à 3, **caractérisé en ce que** la broche d'estampage (10) comprend un élément d'étanchéité pouvant venir en contact avec l'ouverture de la préforme de corps creux (9) et rendre celle-ci étanche, et une alimentation en fluide permettant d'introduire un fluide sous pression dans la préforme de corps creux (9).

5. Système selon l'une quelconque des revendications 1 à 4, **caractérisé en ce que** la broche d'estampage (10) peut être déplacée par rapport au plateau de post-traitement (6).

6. Système selon l'une quelconque des revendications 1 à 5, **caractérisé en ce que** le plateau d'accueil (4) comprend au moins deux, de manière préférée trois, groupes de cavités d'accueil (5), chaque groupe comprenant une pluralité de cavités d'accueil (5), par exemple 192, et les groupes étant agencés à une distance a les uns des autres, le dispositif permettant de déplacer le plateau d'accueil (4) étant de manière préférée conçu de manière à pouvoir déplacer le plateau d'accueil (4) dans au moins deux positions différentes, la première position de retrait et une deuxième position de retrait, entre deux moitiés d'outil ouvertes et espacées l'une de l'autre de la distance a.

7. Système selon la revendication 6, **caractérisé en ce que** le dispositif permettant de déplacer le plateau d'accueil (4) est conçu de manière à pouvoir déplacer le plateau d'accueil (4) dans au moins deux positions différentes, la première position de post-traitement et la deuxième position de post-traitement, à l'extérieur des moitiés d'outil espacées l'une de l'autre de la distance a.

8. Système selon l'une quelconque des revendications 6 à 7, **caractérisé en ce que** le système de post-traitement comprend un groupe de broches d'estampage (10) et un groupe d'éléments de post-traitement (7, 8) qui sont espacés les uns des autres d'une distance a et sont conçus de telle manière que, dans la première position, les broches d'estampage (10) sont positionnées à l'intérieur du premier groupe de cavités d'accueil (5) et les éléments de post-traitement (7, 8) sont positionnés à l'intérieur du deuxième groupe de cavités d'accueil (5) ou viennent en contact avec des préformes (9) accueillies dans celles-ci, et, dans la deuxième position, les broches d'estampage (10) sont positionnées à l'intérieur du deuxième groupe de cavités d'accueil (5) et les éléments de post-traitement (7, 8) sont positionnés à l'intérieur du premier groupe de cavités d'accueil (5) ou viennent en contact avec des préformes (9) accueillies dans celles-ci, le système de post-traitement comprenant de manière préférée au moins un autre groupe d'éléments de post-traitement (7, 8), un groupe d'éléments de post-traitement (7, 8) étant formé d'éléments d'éjection (8) et l'autre groupe d'éléments de post-traitement étant formé de broches de post-traitement (7) comprenant un canal de fluide.

9. Système selon l'une quelconque des revendications 1 à 8, **caractérisé en ce que** le plateau de post-traitement (6) comprend un plateau d'estampage pouvant être déplacé par rapport au plateau de post-traitement (6), la broche d'estampage (10) ou le groupe de broches d'estampage (10) étant fixé(e) au plateau d'estampage, le plateau de post-traitement (6) et le plateau d'estampage étant de manière préférée reliés l'un à l'autre par l'intermédiaire d'un guidage à colonne et la broche d'estampage (10) ou le groupe de broches d'estampage (10) s'étendant de manière particulièrement préférée à travers une ou plusieurs ouverture(s) du plateau de post-traitement (6).

10. Système selon l'une quelconque des revendications 1 à 9, **caractérisé en ce que** la broche d'estampage (10) ou le groupe de broches d'estampage (10) comprend une ou plusieurs ouverture(s) permettant d'acheminer du fluide à l'intérieur de la préforme (9), la broche d'estampage (10) comprenant un élément d'étanchéité conçu de manière à pouvoir rendre étanche la préforme (9) lorsque la broche d'estampage (10) est agencée à l'intérieur de la préforme (9), de sorte qu'une surpression puisse être générée à l'intérieur de la préforme (9) grâce à l'acheminement de fluide.

11. Système selon l'une quelconque des revendications 1 à 10, **caractérisé en ce qu'un** dispositif de verrouillage est prévu qui, dans un état activé, assure une liaison par complémentarité de forme entre le plateau d'accueil (4) et le plateau de post-traitement (6) dans les première et deuxième positions, ladite liaison devant être désactivée si le plateau d'accueil (4) doit être déplacé dans la troisième position par rapport au plateau de post-traitement (6).
